(19) Europäisches Patentamt
European Patent Office
Office européen des brevets

(11) **EP 4 104 945 A1**

(12) **EUROPEAN PATENT APPLICATION**
published in accordance with Art. 153(4) EPC

(43) Date of publication:
**21.12.2022 Bulletin 2022/51**

(21) Application number: **20918437.3**

(22) Date of filing: **02.10.2020**

(51) International Patent Classification (IPC):
**B21D 22/00** (2006.01)   **B21D 22/20** (2006.01)

(52) Cooperative Patent Classification (CPC):
**B21D 22/00; B21D 22/20**

(86) International application number:
**PCT/JP2020/037618**

(87) International publication number:
**WO 2021/161578 (19.08.2021 Gazette 2021/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.02.2020   JP 2020022953**

(71) Applicant: **JFE Steel Corporation
Tokyo 100-0011 (JP)**

(72) Inventors:
• **FUJII, Yusuke
Tokyo 100-0011 (JP)**
• **URABE, Masaki
Tokyo 100-0011 (JP)**
• **TOBITA, Shunsuke
Tokyo 100-0011 (JP)**

(74) Representative: **Grünecker Patent- und
Rechtsanwälte
PartG mbB
Leopoldstraße 4
80802 München (DE)**

(54) **METHOD FOR PREDICTING CHANGE IN SHAPE OF PRESS-FORMED PART**

(57)    A shape change prediction method for a press formed part according to the present invention predicts a shape change of a press formed part 1, which is released from a die and springs back, with the lapse of time units, and includes: a shape/residual stress immediately after springback acquisition step S1 of acquiring a shape and a residual stress of the press formed part 1 immediately after the springback by a springback analysis of the press formed part 1; a residual stress relaxation/reduction setting step S3 of setting a value of a residual stress relaxed and reduced from the acquired residual stress to the press formed part 1 immediately after the springback; and a shape analysis step S5 of determining a shape, in which moments of force are balanced, for the press formed part 1 to which the value of the relaxed and reduced residual stress is set.

FIG.1

**Description**

Field

The present invention relates to a shape change prediction method for a press formed part, and specifically relates to a shape change prediction method for a press formed part in which method a shape change of a press formed part after a release from a die and springback is predicted.

Background

Press forming is a manufacturing method capable of manufacturing metal parts at a low cost in a short time, and is used for manufacturing of many automotive parts. In recent years, in order to achieve both improvement in collision safety of an automobile and weight reduction of an automotive body, a metal sheet having higher strength is used for press forming of the automotive parts.

One of main problems of a case where a high-strength metal sheet is press-formed is deterioration in dimensional accuracy due to springback. A phenomenon in which a residual stress generated in the press formed part when the metal sheet is deformed by the press forming becomes a driving force and the press formed part released from the die instantaneously tries to return to a shape of the metal sheet before the press forming like a spring is called springback.

Since the residual stress generated by the press forming becomes large with respect to a metal sheet having high strength (such as high-tensile steel sheet), a shape change due to the springback also becomes large. Thus, it becomes difficult to keep the shape after the springback within a prescribed dimension as the metal sheet has higher strength. Thus, a technique of accurately predicting the shape change of the press formed part due to the springback is important.

A press forming simulation by a finite element method is generally used to predict the shape change due to the springback. A procedure in the press forming simulation is divided into a first stage in which a press forming analysis of a process of press forming a metal sheet up to a forming bottom dead center is performed first and a residual stress generated in a press formed part is predicted (for example, Patent Literature 1), and a second stage in which a springback analysis in which a shape of a press formed part removed from a die is changed due to springback is performed and a shape with which a moment of force and a residual stress are balanced is predicted (for example, Patent Literature 2).

Citation List

Patent Literature

Patent Literature 1: Japanese Patent No. 5795151
Patent Literature 2: Japanese Patent No. 5866892
Patent Literature 3: Japanese Patent Application Laid-open No. 2013-113144

Summary

Technical Problem

Hitherto, a shape of a press formed part that is released from a die and springs back has been predicted by a press forming simulation in which the above-described press forming analysis in the first stage and springback analysis in the second stage are integrated. However, when comparing a shape of a press formed part, which shape is predicted by the press forming simulation, with a shape of a press formed part that is actually press-formed, the inventors have found that there is a press formed part for which shape prediction accuracy by the press forming simulation is low.

Thus, a cause of the decrease in the shape prediction accuracy in the press forming simulation has been invested, and it has been found that shapes are different immediately after the press forming (immediately after the die release and the springback) and after several days even in the same press formed part.

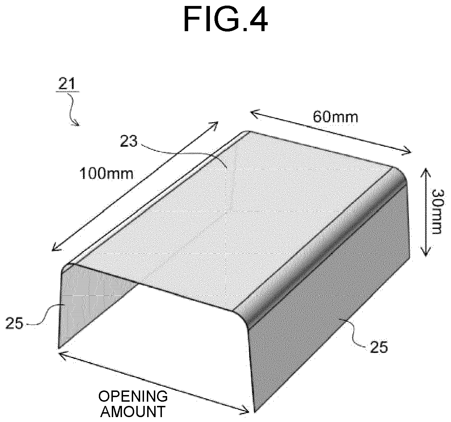

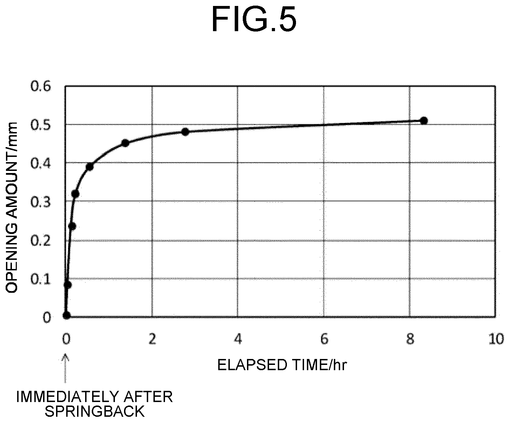

As an example, a result of measuring a shape change over time of a press formed part 21 having a U-shape cross-sectional shape including a top portion 23 and a pair of side wall portions 25 illustrated in FIG. 4 is illustrated in FIG. 5. As illustrated in FIG. 5, when an opening amount of the press formed part 21 immediately after the side wall portions 25 are opened and springback is generated at a moment of a release from a die is set as a reference, it can be understood that a shape change in which the opening amount of the side wall portions 25 of the press formed part 21 gradually increases is generated with the lapse of time units by the minute or hour such as 30 minutes or 10 hours.

Although such a shape change of the press formed part with the lapse of time units seems to be similar to a phenomenon in which a structural member that keeps receiving a high press load from the outside gradually deforms, such as a creep phenomenon (for example, Patent Literature 3), a shape change generated in a press formed part to which a press load is not applied from the outside in a manner illustrated in FIG. 5 has not been known until now.

Furthermore, since the second stage (springback analysis) in the conventional press forming simulation is to predict a shape of a press formed part immediately after springback at a moment of a removal from a die, there has been no study until now on prediction of the shape change of the sprung-back press formed part, which is an object of the present application, after several days, for example. In addition, as described above, the shape change of the sprung-back press formed part with the lapse of time units is generated without application of a press load from the outside. Thus, even when an attempt to predict the shape change of the press formed part with the lapse of time units is made, it is not possible to apply an analysis method that handles the shape change due to the creep phenomenon.

The present invention has been made to solve the above problems, and an object thereof is to propose a shape change prediction method for a press formed part in which method a shape change of a press formed part with the lapse of time units after springback at a moment of a release from a die is predicted.

Solution to Problem

The present invention specifically includes the following configurations.

A shape change prediction method according to the present invention for a press formed part for predicting a shape change of the press formed part with a lapse of time units after springback at a moment of a release from a die includes: a shape/residual stress immediately after springback acquisition step of acquiring a shape and a residual stress of the press formed part immediately after the springback by a springback analysis of the press formed part; a residual stress relaxation/reduction setting step of setting a value of a residual stress relaxed and reduced from the acquired residual stress to the press formed part immediately after the springback; and a shape analysis step of determining a shape, in which moments of force are balanced, for the press formed part to which the value of the relaxed and reduced residual stress is set.

In the above-described shape change prediction method, the residual stress relaxation/reduction setting step includes reducing the residual stress of the entire press formed part immediately after the springback at a predetermined rate.

In the above-described shape change prediction method, the residual stress relaxation/reduction setting step includes calculating a ratio of the residual stress of the press formed part immediately after the springback to tensile strength of a blank used for press forming of the press formed part, and reducing a residual stress of only a portion in which the calculated ratio is equal to or higher than a predetermined value at a predetermined rate.

In the above-described shape change prediction method, the residual stress relaxation/reduction setting step includes calculating a ratio of the residual stress of the press formed part immediately after the springback to tensile strength of a blank used for press forming of the press formed part, and reducing residual stresses of portions at different rates between a portion in which the calculated ratio is equal to or higher than a predetermined value and a portion in which the calculated ratio is lower than the predetermined value.

In the above-described shape change prediction method, a blank used for press forming of the press formed part is a metal sheet having tensile strength of a 150 MPa grade or higher and a 2000 MPa grade or lower. Advantageous Effects of Invention

In the present invention, a shape/residual stress immediately after springback acquisition step in which step a shape and a residual stress of a press formed part immediately after the springback are acquired by a springback analysis of the press formed part, a residual stress relaxation/reduction setting step of setting, with respect the acquired press formed part immediately after the springback, a value of a residual stress relaxed and reduced from a residual stress thereof, and a shape analysis step of determining a shape in which moments of force are balanced with respect to the press formed part in which the value of the residual stress is relaxed, reduced, and set are included. Thus, it is possible to simulate the stress relaxation of the sprung-back press formed part with the lapse of time units and accurately predict the shape change of the press formed part.

Brief Description of Drawings

FIG. 1 is a flowchart illustrating a flow of processing of a shape change prediction method for a press formed part according to an embodiment of the present invention.
FIG. 2 is a view illustrating a press formed part as an example of a forming object in the embodiment and an example of the present invention.

FIG. 3 is a view illustrating a result of a shape change of a press formed part which is determined by a springback analysis and in which a residual stress is relaxed and reduced with respect to a press formed part after springback in the example.

FIG. 4 is a view illustrating a press formed part that has a U-shape cross-sectional shape and that is a measurement object of a shape change with the lapse of time units.

FIG. 5 is a view illustrating, as an example of the shape change of the press formed part with the lapse of time units, a measurement result of an opening amount after the press formed part having the U-shape cross-sectional shape is released from a die and springs back.

FIG. 6 is a view for describing a stress relaxation phenomenon in which stress is relaxed and reduced over time in a state in which strain is kept constant.

Description of Embodiments

In order to solve the above-described problems, as a preliminary stage to establish a method of predicting a shape change of a press formed part in time units after a release from a die and springback, various studies have conducted on a cause of a shape change of the press formed part with the lapse of time units.

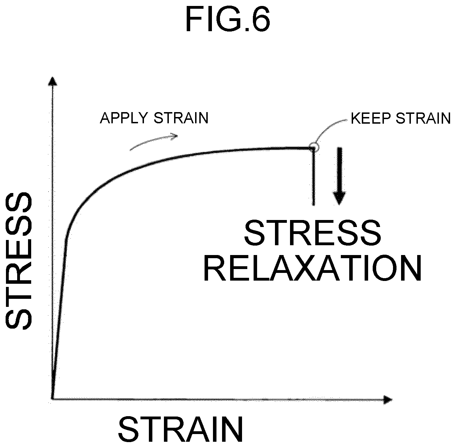

In the studies, the inventors have focused on a stress relaxation phenomenon in which stress is gradually decreased with the lapse of time in a case where strain is applied to a metal sheet and the strain is kept constant as illustrated in FIG. 6. Also in the press formed part after the springback, it has been estimated that the residual stress of the press formed part is decreased with the lapse of time units, similarly to the stress relaxation phenomenon as illustrated in FIG. 6. Then, it has been found that due to stress relaxation by a decrease in the residual stress of the press formed part with the lapse of time units, a shape of the press formed part changes in such a manner as to be balance with relaxed moment of stress.

That is, when the press formed part springs back from the bottom dead center after the press forming, a residual stress is generated therein at the time point. With respect to the generated residual stress, for a difference between a residual stress on a front side and a residual stress on a back side in a thickness direction, the difference between the residual stress on the front side and the residual stress on the back side in the thickness direction of the press formed part is relaxed and reduced with the lapse of time units. As a result, it has been found that a processed portion of the press formed part has a shape having a less residual stress than the shape immediately after the springback.

This phenomenon is quite different from the conventional springback behavior due to the residual stress reduction. In the conventional springback behavior, with respect to the residual stress generated at the bottom dead center after the press forming, when a value of the residual stress to be generated is forcibly reduced or a difference between the residual stresses to be generated on the front side and the back side of the press formed part is forcibly reduced by a specific means, the springback is controlled and the shape at the press forming bottom dead center is kept in the state after the press forming.

On the other hand, in a behavior of the stress relaxation that is the object of the present invention, since an already-existing residual stress is relaxed without being forced by the outside after the springback is generated from the bottom dead center after the press forming, there is an attempt to return to a state with no residual stress. As a result, for example, a bent angle and a curl become larger than those immediately after the springback, and the shape of the press formed part becomes further away from a target shape.

Next, the inventors have studied a method for predicting a shape change of a press formed part due to stress relaxation. As a result, it has been found that it is possible to predict the shape change of the press formed part due to stress relaxation with the lapse of time units by further performing an analysis in a third stage in which the residual stress of the press formed part immediately after the springback, which part is acquired in the second stage (springback analysis) of the press forming simulation described above, is relaxed and reduced and a shape balanced with a moment of force of the press formed part is determined.

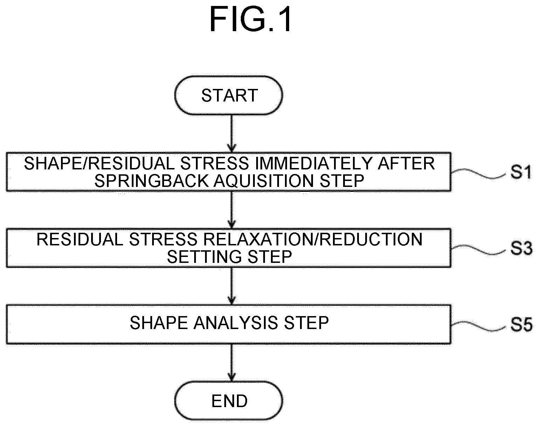

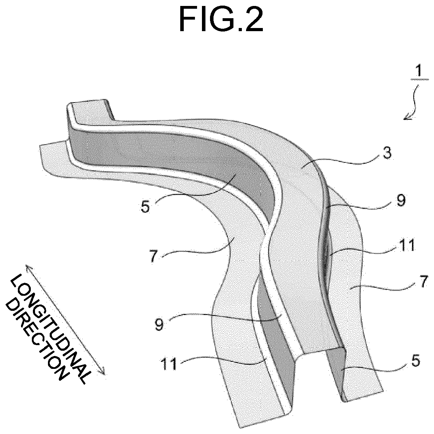

A shape change prediction method for a press formed part according to an embodiment of the present invention is to predict a shape change in a press formed part, which springs back at a moment of a release from a die, with the lapse of time units thereafter. As illustrated in FIG. 1, a shape/residual stress immediately after springback acquisition step S1, a residual stress relaxation/reduction setting step S3, and a shape analysis step S5 are included. Note that in the present embodiment, each of the above steps will be described with an example of a press formed part 1 having a hat-shaped cross-sectional shape including a top portion 3, side wall portions 5, and flange portions 7 being an object, as illustrated in FIG. 2.

<Shape/residual stress immediately after springback acquisition step>

The shape/residual stress immediately after springback acquisition step S1 is a step of acquiring, by the springback analysis of the press formed part 1, the shape and the residual stress of the press formed part 1 immediately after the springback.

As an example of specific processing of acquiring the shape and the residual stress of the press formed part 1 immediately after the springback, there is a press forming simulation by a finite element method including a first stage in which a press forming analysis of a process of press forming a metal sheet up to a forming bottom dead center is performed with a die model acquired by modeling of a die used for press forming of the actual press formed part 1 and a shape and residual stress of the press formed part 1 at the forming bottom dead center is determined, and a second stage in which a springback analysis to determine a shape, in which moments of force are balanced, of the press formed part 1 immediately after the determined press formed part 1 at the forming bottom dead center is released from the die model is performed.

<Residual stress relaxation/reduction setting step>

The residual stress relaxation/reduction setting step S3 is a step of setting, with respect to the press formed part 1 immediately after the springback which part is acquired in the shape/residual stress immediately after springback acquisition step S1, a value of a residual stress relaxed and reduced from the residual stress thereof.

As a specific method of setting the residual stress of the press formed part 1 immediately after the springback to a reduced value, for example, there are the following (1) to (3).

(1) The residual stress of the entire press formed part 1 is reduced at a predetermined rate.
(2) A ratio of the residual stress of the press formed part 1 to tensile strength of a blank used for press forming of the press formed part 1 is calculated, and a residual stress of only a portion, where the calculated ratio is equal to or higher than a predetermined value in the press formed part 1, is reduced at a predetermined rate.
(3) A ratio of the residual stress of the press formed part 1 to tensile strength of a blank used for press forming of the press formed part 1 is calculated, and residual stresses of a portion where the calculated ratio is equal to or higher than a predetermined value and a portion where the calculated ratio is lower than the predetermined value are reduced at different rates. In this case, reducing the residual stresses of the two portions in the press formed part 1 is not a limitation, and residual stresses of three or more portions, in which ranges of values of residual stresses are different, may be reduced at different rates.

In each of (1) to (3) described above, the predetermined rate for reducing the residual stress may be appropriately set. For example, in a case of (1) described above, it is preferable to reduce the residual stress of the entire press formed part 1 immediately after the springback by 10% or more.

Furthermore, in (2) or (3) described above, the portion where the residual stress is reduced is defined on the basis of the ratio of the value of the residual stress to the tensile strength of the blank used for the press forming for the following reasons.

In a portion where the blank (metal sheet) is greatly deformed, such as the punch shoulder 9 and the die shoulder 11 of the press formed part 1 in a manner illustrated in FIG. 2, and a portion on which stretch flange forming is performed in the press forming process, the residual stress tends to have a large value not only in the die at a forming bottom dead center but also immediately after the release from the die and springback (after the second stage described above). Then, when the residual stress is large, the value thereof is likely to change greatly with the lapse of time units, and an influence on the shape change of the press formed part 1 also increases.

In addition, since the residual stress generated in the press forming process also increases as material strength of the blank increases, it is necessary to consider the material strength of the blank when determining the portion where the residual stress is reduced. Thus, in a case where the method of (2) or (3) is applied in the residual stress relaxation/reduction setting step S3, a portion where the residual stress is reduced may be determined by utilization of a ratio R in the following.

$$R = (residual\ stress)/(tensile\ strength\ of\ a\ blank) \times 100$$

In addition, in a case of press forming using blanks having similar tensile strength, a residual stress of only a portion, in which a value of the residual stress is equal to or larger than a predetermined value, of the press formed part 1 may be reduced at a predetermined rate, or residual stresses may be reduced at different rates in a portion where a value of the residual stress is equal to or larger than a predetermined value and a portion where a value of the residual stress is smaller than the predetermined value. Furthermore, reduction may be performed at different rates with respect to a plurality of portions having different values of residual stresses.

<Shape analysis step>

The shape analysis step S5 is a step of performing an analysis to determine a shape, in which moments of force are balanced, with respect to the press formed part 1 in which the residual stress is relaxed, reduced, and set in the residual stress relaxation/reduction setting step S3.

As described above, according to the shape change prediction method for a press formed part of the present embodiment, the value of the residual stress relaxed and reduced from the residual stress of the press formed part 1 immediately after the springback, which part is acquired by the springback analysis, is set with respect thereto and the shape balanced with the moment of force is determined by analysis with respect to the press formed part 1 in which the value of the residual stress is relaxed, reduced, and set. Thus, it is possible to simulate the stress relaxation and the shape change in the lapse of time units in the actual press formed part 1, and to predict the shape change of the press formed part 1 with the lapse of time units after the release from the die and the springback.

Note that an action and effect of a case where (1) "the residual stress of the entire press formed part 1 immediately after the springback is reduced at a predetermined rate" (described above) in the residual stress relaxation/reduction setting step S3 according to the present embodiment has been studied in an example described later.

On the other hand, in the residual stress relaxation/reduction setting step S3, (2) and (3) described above are to specify a portion where the residual stress is relaxed, reduced, and set on the basis of the ratio between the residual stress of the press formed part 1 immediately after the springback and the tensile strength of the blank used for the press forming. This is because of the following. That is, as described above, when the residual stress is large, the value thereof is likely to change greatly with the lapse of time units, and thus an influence on the shape change of the press formed part 1 also increases, and the residual stress generated in the press forming process also increases when the material strength of the blank increases.

Thus, in a case where the method of (2) or (3) is applied to the residual stress relaxation/reduction setting step S3, it can be expected that the shape change of the press formed part 1 due to stress relaxation is predicted well. Note that in the method of (2) or (3), a predetermined value for determining a portion where the residual stress is reduced and a rate of reducing the residual stress are studied in the example (described later).

However, in a case where the influence of the tensile strength of the blank on the shape change of the press formed part with the lapse of time units after the springback is low, in the residual stress relaxation/reduction setting step, the portion in which the residual stress is reduced of the press formed part immediately after the springback may be determined on the basis of an absolute value of the residual stress immediately after the springback or a relative value of the residual stress (such as ratio to the maximum value of the residual stress of the press formed part immediately after the springback).

In addition, in the present invention, the residual stress relaxation/reduction setting step is not limited to reducing the residual stress of the press formed part 1 immediately after the springback at a predetermined rate. A value of the residual stress may be reduced by subtraction of an arbitrary constant value (> 0) from an absolute value of the residual stress in a whole or a part of the press formed part 1 immediately after the springback.

As a specific method of subtracting a constant value from the residual stress of the press formed part 1 in such a manner, for example, a method of subtracting a certain constant value from the residual stress of the entire press formed part 1, a method of subtracting a certain value from the residual stress of a portion where the residual stress is equal to or higher than a predetermined value, or a method of changing a value subtracted from the residual stress of each portion between a portion where the residual stress is equal to or higher than a predetermined value and a portion where the residual stress is lower than the predetermined value may be appropriately selected.

Furthermore, in the shape change prediction method for a press formed part according to the present invention, although a shape and a kind of a blank (metal sheet) used for the press forming of the press formed part, and the press formed part are not specifically limited, the shape change prediction method is more effective for an automotive part press formed by utilization of a blank with which the press formed part has a higher residual stress.

Specifically, the blank is preferably a metal sheet having tensile strength of a 150 MPa grade or higher and a 2000 MPa grade or lower and a thickness of 0.5 mm or more and 4.0 mm or more.

Since a blank (metal sheet) having tensile strength lower than the 150 MPa grade is hardly used for the press formed part, there is little advantage of using the shape change prediction method for a press formed part according to the present invention. With respect to a part in which a blank having tensile strength of the 150 MPa grade or higher is used and which has low rigidity, such as an outer panel of an automobile, a shape change due to a change in residual stress is likely to be generated. Thus, there are many advantages of applying the present invention and the present invention can be suitably applied.

On the other hand, since a blank having tensile strength exceeding the 2000 MPa grade has poor elongation, for example, there is a case where a crack is generated in the press forming process in the punch shoulders 9 and the die shoulders 11 in the press formed part 1 having the hat-shaped cross-sectional shape in a manner illustrated in FIG. 2 and the press forming cannot be performed.

In addition, with respect to the shape of the press formed part, for example, it is desirable to apply the present invention to a press formed part having a shape in which a residual stress in a bent portion or a side wall portion is high, such as a press formed part having a U-shape cross-sectional shape or a hat-shaped cross-sectional shape.

In addition, as the kind of the press formed part, it is preferable to apply the present invention to automotive parts such as outer panels such as a door, roof, and hood having low rigidity, and frame parts such as an A pillar, B pillar, roof rail, side rail, front side member, rear side member, and cross member using a high-strength metal sheet.

Note that the present invention can be applied to a press formed part press-formed by bend forming, crash forming, or deep drawing, and a press method of the press formed part is not limited.

[Example]

An action and effect of the shape change prediction method for a press formed part according to the present invention have been verified, and results thereof will be described below.

Here, a shape change of a press formed part with the lapse of time units was measured, and the shape change of the press formed part was predicted by the shape change prediction method for the press formed part according to the present invention.

<Measurement of a shape change of a press formed part with the lapse of time units>

A metal sheet A having the mechanical properties illustrated in Table 1 was used as a blank, and press forming of the press formed part 1 having the hat-shaped cross-sectional shape illustrated in FIG. 2 was performed. Then, the press formed part 1 that was press-formed up to a forming bottom dead center was released from a die, and a change in the shape of the press formed part 1 over time was measured. Note that a thickness of the metal sheet A is 1.6 mm, yield strength is 880 MPa, tensile strength is 1210 MPa, and elongation is 13%.

Table 1

| | Thickness/mm | Yield strength/MPa | Tensile strength/MPa | Elongation/% |
|---|---|---|---|---|
| Metal sheet A | 1.6 | 880 | 1210 | 13 |

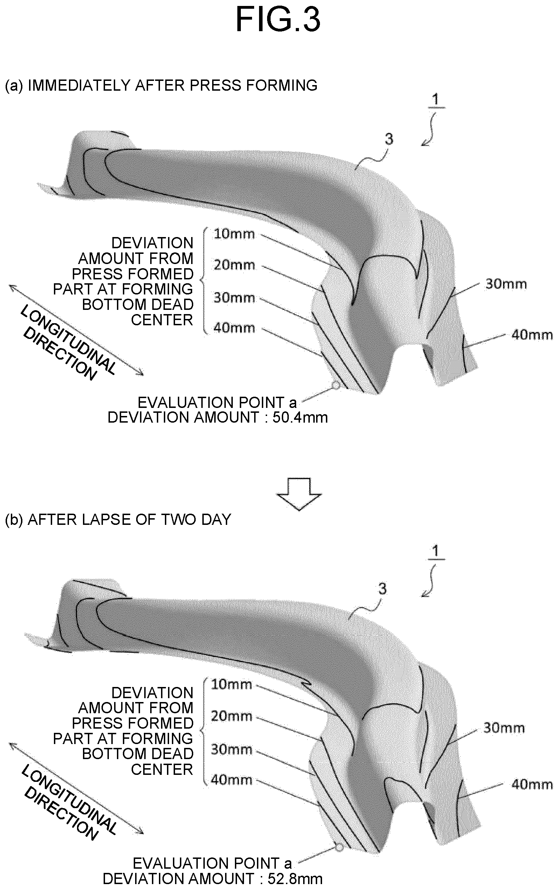

Measurement results of the shape of the press formed part 1 immediately after press forming of the metal sheet (steel sheet) A (immediately after the release from the die and springback) and after the lapse of two days are illustrated in FIG. 3. Numerical values of the press formed part 1 illustrated in FIG. 3 are deviation amounts from a shape of the press formed part 1 at the forming bottom dead center (hereinafter, referred to as "forming bottom dead center shape"), and each of numerical values of 10 mm to 50 mm in the drawing indicates a value of a contour line of the deviation amount in the press formed part 1 of when the deviation amount at a center of the top portion 3 of the press formed part 1 in a longitudinal direction is 0 mm.

Press forming was performed by utilization of a blank with a fine mesh printed on a surface, and the top portion 3 at the center in the longitudinal direction of the press formed part 1 was made to match and a distance from the forming bottom dead center immediately after the springback and a distance from the forming bottom dead center after the lapse of two days were measured with respect to an intersection (node) forming each mesh, whereby the deviation amount was determined.

As illustrated in FIG. 3(a), springback was generated in the press formed part 1 after the release from the die. Then, a portion most deviated from the forming bottom dead center shape was an edge portion of the press formed part 1 (leading end of the flange portion 7 in the longitudinal direction, and referred to as "evaluation point a" in the following), and a deviation amount thereof was 50.4 mm. Then, as illustrated in FIG. 3(b), the shape of the press formed part 1 after the lapse of two days was changed as compared with that immediately after the springback. Specifically, the deviation amount at the evaluation point a was 52.8 mm, and was changed by 2.2 mm as compared with that immediately after the springback (FIG. 3(a)).

<First example: shape change prediction of a press formed part>

As the first example, a press formed part according to the present invention was deep drawn as an example, and a shape change of the press formed part 1 illustrated in FIG. 2 was predicted by the shape change prediction method according to the present invention.

First, a press forming analysis of a process of press forming the metal sheet A up to the forming bottom dead center was performed by utilization of a die model acquired by modeling of the die used for the press forming of the press formed part 1, and a residual stress of the press formed part 1 at the forming bottom dead center was determined.

Subsequently, a springback analysis of determining the shape and the residual stress of the press formed part 1 immediately after the press formed part 1 at the forming bottom dead center was released from the die model was performed.

Furthermore, a value of a residual stress acquired by relaxation and reduction of the residual stress of the entire press formed part 1 immediately after springback, which residual stress was acquired by the springback analysis, at a predetermined rate was set. Then, an analysis to determine a shape in which moments of force were balanced was performed with respect to the press formed part 1 in which the residual stress was reduced.

In the first example, examples of setting a value of a residual stress acquired by reducing the residual stress of the entire press formed part 1 which residual stress was acquired by the springback analysis, and acquiring a shape change were set as invention examples, predetermined rates of reducing the residual stress being 10% (first invention example), 20% (second invention example), and 40% (third invention example).

Furthermore, as comparative objects, the press forming analysis and the springback analysis were performed similarly to the invention example, and an example of leaving what is immediately after the springback as it was set as a first comparison example, and an example in which an analysis to determine a shape without reducing the residual stress was performed after the springback analysis was set as a second comparison example.

A rate of relaxation and reduction of the residual stress (reduction rate of the residual stress), and a deviation amount of the evaluation point a from the press formed part 1 at the forming bottom dead center as a result of the shape change of the press formed part 1 in which the residual stress was reduced are collectively illustrated in Table 2.

Table 2

|  | Reduction rate of residual stress/% | Deviation amount of evaluation point a | | |
|---|---|---|---|---|
|  |  | Prediction value Dc/mm | Difference between experimental value (after lapse of two days) De and prediction value Dc/mm | Error rate of prediction value Dc with respect to experimental value (after lapse of two days) De/% |
| First comparison example | - | 49.5 | 3.3 | 6.3 |
| Second comparison example | 0 | ↑ | ↑ | ↑ |
| First invention example | 10 | 51.3 | 1.5 | 2.8 |
| Second invention example | 20 | 52.2 | 0.6 | 1.1 |
| Third invention example | 40 | 53.4 | -0.6 | -1.1 |

In and after Table 2, a prediction value Dc is the deviation amount of the evaluation point a of a case where the top portion 3 at the center in the longitudinal direction of the press formed part 1 is made to match in each of the first invention example to the third invention example, and the first comparison example and the second comparison example, and an experimental value De is the deviation amount of the evaluation point a of the press formed part 1, which is actually press-formed, after the lapse of two days (= 52.8 mm). In addition, a difference and an error rate of the prediction value with respect to the experimental value are respectively calculated by the following equations.

```
Difference in the prediction value (mm) = De - Dc
```

$$\text{Error rate of the prediction value (\%)} = (De - Dc)/Dc \times 100$$

The deviation amounts in the first comparison example and the second comparison example were equal, the differences from the experimental value being 3.3 mm and the error rates of the prediction values being 6.3%.

In the first invention example, as a result of reducing the residual stress by 10%, the difference in the prediction value was 1.5 mm and the error rate of the prediction value was 2.8%. Thus, there was an improvement compared to the first comparison example and the second comparison example. In the second invention example, as a result of reducing the residual stress by 20%, the difference in the prediction value was 0.6 mm and the error rate of the prediction value was 1.1%. Thus, there was an improvement compared to the first comparison example and the second comparison example, and a result was better than that of the first invention example. In the third invention example, as a result of reducing the residual stress by 40%, the difference in the prediction value was - 0.6 mm and the error rate of the prediction value was - 1.1%. Although the both were negative values, there was an improvement compared to the first comparison example and the second comparison example when absolute values were compared, and a result was better than that of the first invention example.

<Second example: shape change prediction of a press formed part>

As the first example, with respect to the press formed part 1 immediately after the springback which part was acquired by the springback analysis (FIG. 2), the value of the residual stress acquired by reducing the residual stress in a part of portions was set, and an analysis to determine the shape in which the moments of force were balanced was performed.

The shape and the residual stress of the press formed part 1 immediately after the springback were determined by performing the press forming analysis of the process of press forming the metal sheet A (Table 1) up to the forming bottom dead center by using the die model and the springback analysis of the press formed part 1 immediately after the press formed part 1 at the forming bottom dead center was released, similarly to the first example described above. Subsequently, an analysis to determine a shape in which moments of force were balanced was performed with respect to the press formed part 1 by reducing the residual stress of a part of portions in the press formed part 1.

In the second example, on the basis of a ratio R of the residual stress of the press formed part 1 acquired by the springback analysis to tensile strength of the metal sheet A, a portion where the residual stress was to be reduced was determined with respect to the press formed part 1, and the residual stress of the determined portion was reduced at a predetermined rate.

Predetermined values to determine the portion where the residual stress was to be reduced (determination criterion in Table 3), rates of relaxation and reduction of the residual stress (reduction rate in Table 3), and a deviation amount of the evaluation point a as a result of the shape change of the press formed part 1 in which the residual stress was reduced in the fourth invention example to the eleventh invention example are collectively illustrated in Table 3.

Table 3

| | Determination criterion for portion where residual stress is to be reduced | | Deviation amount of evaluation point a | | |
| | Ratio R of residual stress to tensile strength % | Reduction rate of residual stress % | Prediction value Dc/mm | Difference between experimental value (after lapse of two days) De and prediction value Dc/mm | Error rate of prediction value Dc with respect to experimental value (after lapse of two days) De/% |
|---|---|---|---|---|---|
| Fourth invention example | lower than 5% | 0% | 52.1 | 0.7 | 1.3 |
| | 5% or more | 20% | | | |
| Fifth invention example | lower than 10% | 0% | 52 | 0.8 | 1.5 |
| | 10% or more | 20% | | | |

(continued)

| | Determination criterion for portion where residual stress is to be reduced | | Deviation amount of evaluation point a | | |
| --- | --- | --- | --- | --- | --- |
| | Ratio R of residual stress to tensile strength % | Reduction rate of residual stress % | Prediction value Dc/mm | Difference between experimental value (after lapse of two days) De and prediction value Dc/mm | Error rate of prediction value Dc with respect to experimental value (after lapse of two days) De/% |
| Sixth invention example | lower than 20% | 0% | 51.6 | 1.2 | 2.3 |
| | 20% or more | 20% | | | |
| Seventh invention example | lower than 30% | 0% | 51.2 | 1.6 | 3.1 |
| | 30% or more | 20% | | | |
| Eighth invention example | lower than 40% | 0% | 50.7 | 2.1 | 4.1 |
| | 40% or more | 20% | | | |
| Ninth invention example | lower than 5% | 10% | 52.2 | 0.6 | 1.1 |
| | 5% or more | 20% | | | |
| Tenth invention example | lower than 10% | 10% | 52.1 | 0.7 | 1.3 |
| | 10% or more | 20% | | | |
| Eleventh invention example | lower than 10% | 10% | 52.2 | 0.6 | 1.1 |
| | 10% or more | 30% | | | |

In the fourth invention example to the eighth invention example, the determination criterion that are predetermined values for determining a portion where the residual stress is to be reduced were set to 5% (fourth invention example), 10% (fifth invention example), 20% (sixth invention example), 30% (seventh invention example), and 40% (eighth invention example), and a residual stress in only a portion where the ratio R of the residual stress of the press formed part 1 to the tensile strength of the metal sheet A was equal to or higher than each determination criterion was reduced at a reduction rate of 20%.

From Table 3, a prediction result of the deviation amount of the evaluation point a in the fourth invention example was about the same degree as that of the second invention example in which the residual stress of the entire press formed part 1 was reduced by 20% (see Table 2 described above). In addition, when the prediction values Dc of the deviation amounts of the evaluation point a in the fourth invention example to the ninth invention example were compared, a deviation amount from the experimental value De became large and prediction accuracy was decreased as a value of the ratio R (%) of the residual stress to the tensile strength, which ratio was the determination criterion for determination of a portion where the residual stress was to be reduced, became large. As a result, it was preferable that the value of the determination criterion for determination of the portion where the residual stress was to be reduced was small in the range of the present embodiment.

In each of the ninth invention example to the eleventh invention example illustrated in Table 3, residual stresses were reduced with reduction rates (not 0) of the residual stresses being made different between a portion where the ratio R of the residual stress of the press formed part 1 to the tensile strength of the metal sheet A was equal to or higher than each determination criterion and a portion where the ratio R was lower than the determination criterion.

In the ninth invention example and the tenth invention example, the determination criteria were set to 5% (ninth invention example) and 10% (tenth invention example), the reduction rate of the residual stress of the portion equal to or higher than the determination criterion was set to 20%, and the reduction rate of the residual stress of the portion lower than the determination criterion was set to 10%. These examples correspond to, in the fourth invention example and the fifth invention example in which the residual stress of only the portion equal to or higher than the determination criterion was reduced, a case where the residual stress of the portion lower than the determination criterion was reduced with the reduction rate of the residual stress of the portion being set to 10%. As illustrated in Table 3, in each of the ninth invention example compared with the fourth invention example and the tenth invention example compared with the fifth invention example, both the difference and the error rate of the prediction value of the deviation amount of the evaluation point a were good results.

In the eleventh invention example, the reduction rate of the residual stress in the portion equal to or higher than the determination criterion was set to 30% in the tenth invention example. As illustrated in Table 3, the difference and the error rate of the prediction value of the deviation amount of the evaluation point a in the eleventh invention example were good results compared to the tenth invention example.

As described above, according to the shape change prediction method for a press formed part of the present invention, it has been proved that it is possible to predict a shape change of the press formed part, which is released from a die and springs back, due to stress relaxation with the lapse of time units.

Industrial Applicability

According to the present invention, it is possible to provide a shape change prediction method for a press formed part which method predicts a shape change in a press formed part with the lapse of time units after springback at a moment of a release from a die.

Reference Signs List

1    PRESS FORMED PART

3    TOP PORTION
5    SIDE WALL PORTION
7    FLANGE PORTION
9    PUNCH SHOULDER
11   DIE SHOULDER
21   PRESS FORMED PART
23   TOP PORTION
25   SIDE WALL PORTION

**Claims**

1. A shape change prediction method for a press formed part for predicting a shape change of the press formed part with a lapse of time units after springback at a moment of a release from a die, the shape change prediction method comprising:

    a shape/residual stress immediately after springback acquisition step of acquiring a shape and a residual stress of the press formed part immediately after the springback by a springback analysis of the press formed part;
    a residual stress relaxation/reduction setting step of setting a value of a residual stress relaxed and reduced from the acquired residual stress to the press formed part immediately after the springback; and
    a shape analysis step of determining a shape, in which moments of force are balanced, for the press formed part to which the value of the relaxed and reduced residual stress is set.

2. The shape change prediction method for a press formed part according to claim 1, wherein the residual stress relaxation/reduction setting step includes reducing the residual stress of the entire press formed part immediately after the springback at a predetermined rate.

3. The shape change prediction method for a press formed part according to claim 1, wherein the residual stress relaxation/reduction setting step includes

    calculating a ratio of the residual stress of the press formed part immediately after the springback to tensile strength of a blank used for press forming of the press formed part, and
    reducing a residual stress of only a portion in which the calculated ratio is equal to or higher than a predetermined value at a predetermined rate.

4. The shape change prediction method for a press formed part according to claim 1, wherein the residual stress relaxation/reduction setting step includes

calculating a ratio of the residual stress of the press formed part immediately after the springback to tensile strength of a blank used for press forming of the press formed part, and
reducing residual stresses of portions at different rates between a portion in which the calculated ratio is equal to or higher than a predetermined value and a portion in which the calculated ratio is lower than the predetermined value.

5. The shape change prediction method for a press formed part according to any one of claims 1 to 4, wherein a blank used for press forming of the press formed part is a metal sheet having tensile strength of a 150 MPa grade or higher and a 2000 MPa grade or lower.

# FIG.1

```
        ┌─────────┐
        │  START  │
        └─────────┘
             │
             ▼
┌─────────────────────────────────────────┐
│ SHAPE/RESIDUAL STRESS IMMEDIATELY AFTER  │ ～ S1
│     SPRINGBACK AQUISITION STEP           │
└─────────────────────────────────────────┘
             │
             ▼
┌─────────────────────────────────────────┐
│  RESIDUAL STRESS RELAXATION/REDUCTION    │ ～ S3
│            SETTING STEP                  │
└─────────────────────────────────────────┘
             │
             ▼
┌─────────────────────────────────────────┐
│          SHAPE ANALYSIS STEP             │ ～ S5
└─────────────────────────────────────────┘
             │
             ▼
        ┌─────────┐
        │   END   │
        └─────────┘
```

# FIG.2

# FIG.3

(a) IMMEDIATELY AFTER PRESS FORMING

DEVIATION AMOUNT FROM PRESS FORMED PART AT FORMING BOTTOM DEAD CENTER
- 10mm
- 20mm
- 30mm
- 40mm
- 30mm
- 40mm

LONGITUDINAL DIRECTION

EVALUATION POINT a
DEVIATION AMOUNT : 50.4mm

(b) AFTER LAPSE OF TWO DAY

DEVIATION AMOUNT FROM PRESS FORMED PART AT FORMING BOTTOM DEAD CENTER
- 10mm
- 20mm
- 30mm
- 40mm
- 30mm
- 40mm

LONGITUDINAL DIRECTION

EVALUATION POINT a
DEVIATION AMOUNT : 52.8mm

# FIG.4

21

23

100mm

60mm

30mm

25

25

OPENING
AMOUNT

# FIG.5

# FIG.6

APPLY STRAIN

KEEP STRAIN

STRESS
RELAXATION

STRESS

STRAIN

## INTERNATIONAL SEARCH REPORT

| International application No. |
| --- |
| PCT/JP2020/037618 |

**A. CLASSIFICATION OF SUBJECT MATTER**
B21D 22/00(2006.01)i; B21D 22/20(2006.01)i
FI: B21D22/00; B21D22/20 E
According to International Patent Classification (IPC) or to both national classification and IPC

**B. FIELDS SEARCHED**

Minimum documentation searched (classification system followed by classification symbols)
B21D22/00; B21D22/20

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | LIM, Hojun, "Time-dependent Springback", International Journal of Material Forming, 03 April 2008, Issue 1, 157-160, page 157, right column to page 160, left column | 1-2, 5<br>3-4 |
| A | JP 2008-55476 A (NIPPON STEEL CORP.) 13 March 2008 (2008-03-13) paragraphs [0060]-[0078], fig. 7-8 | 1-5 |
| A | JP 2013-198927 A (JFE STEEL CORPORATION) 03 October 2013 (2013-10-03) paragraphs [0032]-[0051], fig. 1-4 | 1-5 |
| A | JP 2013-208622 A (JSOL CORPORATION) 10 October 2013 (2013-10-10) paragraphs [0037]-[0072], fig. 1-2 | 1-5 |

☐ Further documents are listed in the continuation of Box C.    ☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 20 November 2020 (20.11.2020) | 01 December 2020 (01.12.2020) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

Form PCT/ISA/210 (patent family annex) (January 2015)

**INTERNATIONAL SEARCH REPORT**
Information on patent family members

| International application no. |
| --- |
| PCT/JP2020/037618 |

| Patent Documents referred in the Report | Publication Date | Patent Family | Publication Date |
| --- | --- | --- | --- |
| JP 2008-55476 A | 13 Mar. 2008 | US 2010/0005845 A1 paragraphs [0218]-[0240], fig. 14-15 WO 2008/026777 A1 EP 2058062 A1 CN 102708222 A KR 10-2009-0046906 A | |
| JP 2013-198927 A | 03 Oct. 2013 | US 2015/0039247 A1 paragraphs [0068]-[0098], fig. 1-4 WO 2013/146106 A1 EP 2832465 A1 CN 104245174 A KR 10-2014-0133878 A | |
| JP 2013-208622 A | 10 Oct. 2013 | (Family: none) | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5795151 B
- JP 5866892 B
- JP 2013113144 A